# EUROPÄISCHE PATENTSCHRIFT

(11) **EP 0 741 238 B1**
(45) Veröffentlichungstag und Bekanntmachung des Hinweises auf die Patenterteilung: **02.06.1999**
(21) Anmeldenummer: 96104321.3
(22) Anmeldetag: 19.03.1996
(51) Int. Cl.: F02B 33/44, F02M 35/14

(54) **Vorrichtung zur Steuerung des Luftstromes einer aufgeladenen Brennkraftmaschine**
Air flow control device for a turbocharged internal combustion engine
Dispositif de contrôle d'écoulement d'air d'un moteur à combustion interne suralimenté

(30) Priorität: 02.05.1995 DE 19516006
(43) Veröffentlichungstag der Anmeldung: 06.11.1996
(73) Patentinhaber: DaimlerChrysler AG, 70567 Stuttgart (DE)
(72) Erfinder: Widmann, Wolfgang, 71729 Erdmannhausen (DE)

(56) Entgegenhaltungen:
- DE-A- 4 216 816
- PATENT ABSTRACTS OF JAPAN vol. 00, no. 00 & JP-A-08 028478 (TOCHIGI FUJI IND CO), 30.Januar 1996,
- PATENT ABSTRACTS OF JAPAN vol. 16, no. 480 (M-1321), 6.Oktober 1992 & JP-A-04 175457 (MAZDA MOTOR CORP), 23.Juni 1992,
- PATENT ABSTRACTS OF JAPAN vol. 6, no. 117 (M-139), 30.Juni 1982 & JP-A-57 046022 (HONDA MOTOR CO), 16.März 1982,

## Beschreibung

Die Erfindung betrifft eine Vorrichtung zur Steuerung des Luftstromes einer aufgeladenen Brennkraftmaschine gemäß dem Oberbegriff des Patentanspruchs 1.

Aus der JP-A-41 75 457 ist eine gattungsgemäße Vorrichtung zur Steuerung des Luftstromes einer aufgeladenen Brennkraftmaschine mit einem Lader bekannt. Der Lader dient zur Förderung von Ladeluft von einer stromauf des Laders angeordneten
Ansaugleitung über eine stromab des Laders angeordnete Ladeluftleitung zur Brennkraftmaschine. Zwischen der Ladeluftleitung und der Ansaugleitung sind zwei Umluftleitungen nebst Umluftklappen vorgesehen. Die beiden Umluftleitungen überbrücken jeweils nicht nur den Lader, sondern mit dem Lader auch einen Zwischenkühler. Die Vorrichtung besitzt außerdem keinen Ansaugstutzen, der über eine Einmündung verfügt, von der stromabwärts ein Leitungsteil abzweigt.

Aus der DE 35 06 235 Al ist ferner eine Vorrichtung zur Steuerung des Luftstromes für eine aufgeladene
Brennkraftmaschine bekannt. Die Vorrichtung umfaßt einen Lader zur Förderung der Ladeluft von einer stromauf des Laders angeordneten Ansaugleitung über eine stromab des Laders angeordnete Ladeluftleitung zur Brennkraftmaschine, wobei die Ansaugleitung einen Ansaugstutzen umfaßt und zwischen der Ladeluftleitung und der Ansaugleitung eine Umluftleitung nebst Umluftklappe angeordnet ist. Die Umluftleitung ist zwischen der Umluftklappe und der Ansaugleitung aus einem Leitungsteil gebildet, das stromab des Ansaugstutzens in die Ansaugleitung des Laders mündet,

Zum allgemeinen technischen Hintergrund wird noch auf die Druckschriften DE-OS 20 27 883 und DE 29 33 556 C2 verwiesen.

Ein Nachteil von Vorrichtungen der gattungsgemäßen Art liegt in deren relativ hohen Ansauggeräuschpegel. Obwohl das durch die Strömungsumlenkung am Ansaugstutzen selbst entstehende Geräusch üblicherweise durch eine strömungsgünstige Ausbildung des Ansaugstutzens stark reduziert wird, verbleibt beispielsweise bei mechanisch aufgeladenen Brennkraftmaschinen ein unbefriedigend hohes Ansauggeräusch, das überwiegend von Druckpulsationen auf der Saugseite des Laders herrührt.

Der Erfindung liegt die Aufgabe zugrunde, eine gattungsgemäße Vorrichtung so auszubilden, daß eine wesentliche Reduzierung des Ansauggeräusches erreichbar ist.

Die Aufgabe wird erfindungsgemäß durch die im Kennzeichen des Patentanspruches 1 gegebenen Merkmale gelöst. Die Merkmale der Unteransprüche geben vorteilhafte Aus- und Weiterbildungen der Erfindung an.

Ein Vorteil der erfindungsgemäßen Vorrichtung liegt darin, daß durch die von einer Pulsationsfrequenz des Laders abhängige Abstimmung der Länge des Leitungsteils von der Umluftklappe bis zur Einmündung in cie Ansaugleitung derart, daß das Leitungsteil bei geschlossener Umluftklappe einen auf eine oder mehrere Pulsationsfrequenzen abgestimmten Resonator bildet, eine wesentliche Reduzierung des Ansauggeräusches erreicht wird. So ist bei Vollastbetrieb die Umluftklappe vollständig geschlossen. Die gesamte Luftmenge wird über den Ansaugstutzen im Luftfilter angesaugt. Das Leitungsteil stellt somit eine geschlossene Verbindung zur Umluftklappe dar und durch die Abstimmung der Länge des Leitungsteils auf die Pulsationsfrequenz des Laders entsteht der Effekt, daß das Leitungsteil als Nebenschlußresonator wirkt, der die Pulsationen des Laders stark dämpft.

Bei teilweise oder vollständig geöffneter Umluftklappe wirkt das Leitungsteil nicht mehr als Resonator, sondern als Ansauggeräuschdämpfer. Dadurch wird durch die erfindungsgemäße Vorrichtung auch im Teillastbetrieb, bei teilweise oder vollständig geöffneter Umluftklappe, eine wesentlich bessere Reduzierung der Ansauggeräusche erreicht.

Die Ausgestaltung der Erfindung nach Anspruch 2 stellt eine bevorzugte Bauausführung der Vorrichtung dar. Weitere Vorteile der Erfindung gehen aus der Beschreibung hervor.

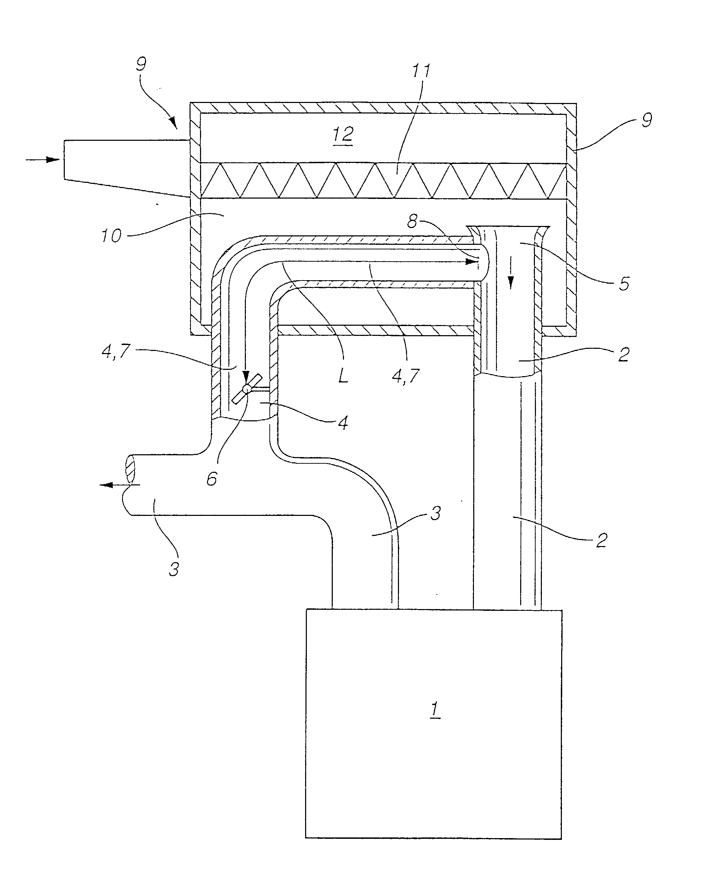

In der einzigen Figur ist die Erfindung anhand einer Prinzipdarstellung näher erläutert. Sie zeigt eine Vorrichtung zur Steuerung des Luftstromes für eine nicht dargestellte aufgeladene Brennkraftmaschine mit einem Lader 1 zur Förderung von Ladeluft von einer Ansaugleitung 2 über eine Ladeluftleitung 3 zur Brennkraftmaschine. Die Ansaugleitung 2 nebst ansaugstutzen 5 ist stromauf und die Ladeluftleitung 3 stromab des Laders angeordnet. Der Lader 1 ist ein mechanischer Lader, der über eine nicht dargestellte Keilriemenverbindung von der Brennkraftmaschine angetrieben wird.

Stromab des Laders 1 führt eine Umluftleitung 4 von der Ladeluftleitung 3 zur Ansaugleitung 2, wobei in der Umluftleitung 4 eine Umluftklappe 6 angeordnet ist und die Umluftleitung 4 zwischen der Umluftklappe 6 und der Ansaugleitung 2 aus einem Leitungsteil 7 gebildet ist, das stromab des Ansaugstutzens 5 in einer Einmündung 8 in die Ansaugleitung 2 des Laders 1 mündet.

Im gezeigten Beispiel ist der Ansaugstutzen 5 und das Leitungsteil 7 in einem Luftfiltergehäuse 9 der Brennkraftmaschine angeordnet, wobei sich der Ansaugstutzen 5 und das Leitungsteil 7 auf einer Reinluftseite 10 eines Luftfilters 11, der im Luftfiltergehäuse 9 eine Rohluftseite 12 von der Reinluftseite 10 trennt, befindet. Das Leitungsteil 7 ist also nur über dessen Einmündung 8 und den Ansaugstutzen 5 der Ansaugleitung 2 mit der Reinluftseite 10 des Luftfilters 11 verbunden.

Zur Reduzierung des Ansauggeräusches des Ansaugstutzens 5 ist eine Länge L des Leitungsteils 7 von der Umluftklappe 6 bis zur Einmündung 8 in die Ansaugleitung 2 abhängig von einer vorgebbaren Pulsationsfrequenz des Laders 1 bemessen, sodaß das Leitungsteil 7 bei geschlossener Umluftklappe 6 einen Resonator (Nebenschlußresonator) bildet, der auf eine oder mehrere Pulsationsfrequenzen des Laders 1 abgestimmt ist. Beim mechanischen Lader wird die Pulsationsfrequenz der Pulsationsschwingungen des Laders durch die Anzahl der Kammerentladungen des Laders pro Laderumdrehung bestimmt. Vorzugsweise erfolgt dabei die Abstimmung der Länge L auf eine wellenförmige Pulsationsschwingung des Laders 1 derart, daß die Einmündung 8 des Leitungsteils 7 (= Mündung des Resonators) im Bereich eines Wellenberges der Pulsationsschwingung des Laders 1 zu liegen kommt.

Um eine möglichst optimale Reduzierung des Ansauggeräusches zu erhalten, ist der Ansaugstutzen 5 im Luftfiltergehäuse 9 integriert. Auch ist das Leitungsteil 7 im Luftfiltergehäuse 9 angeordnet sowie die Umluftklappe 6 am Luftfiltergehäuse 9 angebaut.

Desweiteren ist die Erfindung nicht auf mechanische Lader beschränkt, sondern ist auch für andere Arten von Ladern einsetzbar.

## Patentansprüche

1. Vorrichtung zur Steuerung des Luftstromes einer aufgeladenen Brennkraftmaschine mit einem Lader zur Förderung von Ladeluft von einer stromauf des Laders angeordneten Ansaugleitung über eine stromab des Laders angeordnete Ladeluftleitung zur Brennkraftmaschine, mit einer zwischen der Ladeluftleitung und der Ansaugleitung angeordneten Umluftleitung nebst Umluftklappe dadurch gekennzeichnet, daß die Ansaugleitung (2) einen Ansaugstutzen (5) umfaßt und wobei die Umluftleitung (4) zwischen der Umluftklappe (6) und der Ansaugleitung (2) aus einem Leitungsteil (7) gebildet ist, das stromab des
Ansaugstutzens (5) in die Ansaugleitung (2) des Laders (1) mündet, und daß zur Reduzierung des Ansauggeräusches die Länge (L) des Leitungsteils (7) von der Umluftklappe (6) bis zur Einmündung (8) in die Ansaugleitung (2) so bemessen ist, daß das Leitungsteil (7) bei geschlossener Umluftklappe (6) einen Resonator bildet, der auf eine oder mehrere
Pulsationsfrequenzen des Laders (1) abgestimmt ist, wobei der Ansaugstutzen (5) und das Leitungsteil (7) in einem Luftfilter (11) der Brennkraftmaschine angeordnet sind.

2. Vorrichtung nach Anspruch 1, dadurch gekennzeichnet, daß die Umluftklappe (6) am Luftfilter (11) angeordnet ist.

## Claims

1. A device for controlling the air flow of a supercharged internal combustion engine having a supercharger for conveying boost air from an intake manifold arranged upstream of the supercharger through a boost duct arranged downstream of the supercharger to the internal combustion engine, a circulating-air duct with circulating-air valve being arranged between the boost duct and the intake manifold, characterised in that the intake manifold (2) has a manifold inlet (5) and the circulating-air duct (4) consists of a length of duct (7) between the circulating-air valve (6) and the intake manifold (2) which opens into the intake manifold (2) of the supercharger (1) downstream of the manifold inlet (5), and in that in order to reduce the intake noise, the length (L) of the length of duct (7) from the air-circulating valve (6) to the inlet opening (8) into the intake manifold (2) is dimensioned so that when the circulating-air valve (6) is closed, the length of duct (7) forms a resonator, which matches one or more pulsation frequencies of the supercharger (1), the manifold inlet (5) and the length of duct (7) being arranged in an air filter (11) of the internal combustion engine.

2. A device as claimed in claim 1, characterised in that the circulating-air valve (6) is arranged on the air filter (11).

## Revendications

1. Dispositif pour la commande du circuit d'air d'un moteur à combustion interne suralimenté, comprenant un compresseur destiné à refouler de l'air de suralimentation d'un conduit d'aspiration placé en amont du compresseur au moteur à combustion interne, en passant par un conduit d'air de suralimentation disposé en aval du compresseur, un conduit de recyclage d'air muni d'un volet de recyclage d'air et intercalé entre le conduit d'air de suralimentation et le conduit d'aspiration, caractérisé en ce que le conduit d'aspiration (2) comprend une tubulure d'aspiration (5), le conduit d'air de recyclage (4) étant formé, entre le volet d'air de recyclage (6) et le conduit d'aspiration (2), par une partie de conduit (7) qui débouche dans le conduit d'aspiration (2) du compresseur (1) en aval de la tubulure d'aspiration (5), et en ce que, pour réduire le bruit d'aspiration, la longueur (L) de la partie (7) du conduit allant du volet d'air de recyclage (6) jusqu'au débouché (8) dans le conduit d'aspiration (2) est dimensionnée de manière que, lorsque le volet d'air de recyclage (6) est fermé, la partie de conduit (7) forme un résonateur qui est accordé sur une ou plusieurs fréquences de pulsation du compresseur (1), la tubulure d'aspiration (5) et la partie de conduit (7) étant disposées dans un filtre à air (11) du moteur à combustion interne.

2. Dispositif selon la revendication 1, caractérisé en ce que le volet d'air de recyclage (6) est disposé dans la région du filtre à air (11).
